Europäisches Patentamt

European Patent Office

Office européen des brevets

(11) Veröffentlichungsnummer: **0 099 038**

**A2**

(12) **EUROPÄISCHE PATENTANMELDUNG**

(21) Anmeldenummer: **83106461.3**

(22) Anmeldetag: **02.07.83**

(51) Int. Cl.³: **A 61 J 3/00**

(30) Priorität: **13.07.82 DE 3226110**

(43) Veröffentlichungstag der Anmeldung:
**25.01.84 Patentblatt 84/4**

(84) Benannte Vertragsstaaten:
**AT BE CH DE FR GB IT LI LU NL SE**

(71) Anmelder: **Industry-Consult Gesellschaft für Organisation und Planung mbH**
**Schulstrasse 31**
**D-6800 Mannheim 24(DE)**

(72) Erfinder: **Seifried, Günther**
**Schulstrasse 31**
**D-6800 Mannheim 24(DE)**

(72) Erfinder: **Waldkirch, Kurt**
**Schulstrasse 31**
**D-6800 Mannheim 24(DE)**

(74) Vertreter: **Ratzel, Gerhard, Dr.**
**Seckenheimer Strasse 36a**
**D-6800 Mannheim 1(DE)**

(54) Dragierkesselentleerung.

(57) Die Erfindung betrifft eine Dragierkesselentleerung bei einem Dragierkessel mit einer Kesselklappe (24) in der Kesselwand (32), die im tiefsten Punkt derselben beim Entleerungsvorgang liegt. Es soll nach der Erfindung eine selbsttätige Entleerung im unterschied zu den bekannten manuellen Entleerungen geschaffen werden. Dazu wird ein Zentriersockel (23) auf der Außenseite der Kesselwand (32) einer in dem Zentriersockel (23) passenden, ortsfesten Zentrierplatte (22) gegenüberliegend angeordnet. Der Zentriersockel sorgt zusammen mit der Zentrierplatte für die richtige Orientierung der Kesselklappe. Zur zuverlässigen Trennung der schwarzen Zone von der grauen Zone kann an der Kesselklappe noch ein Entleerungsstutzen (25) angeordnet werden, der gegebenenfalls mit einer Spüldüse (44) mit reinem Spülgas gespült werden kann und gegebenenfalls gegenüber der schwarzen Zone durch eine Luftspaltdichtung über einen Ringkanal (28) mit entsprechend gerichteten Düsen (27) isoliert werden kann.

./...

Croydon Printing Company Ltd.

Fig.1

- 1 -

<u>Dragierkesselentleerung</u>

Die Erfindung betrifft eine Dragierkesselentleerung.

Es sind Dragierkessel bekannt, die in ihrer Kesselwand eine Kesselklappe aufweisen. Diese Kesselklappe ist so in der Kesselwand angeordnet, daß
sie in den tiefsten Punkt derselben gedreht
werden kann, daß also der Dragierkessel selbst
so um seine normale Drehrichtung gedreht werden
kann, daß diese Kesselklappe im tiefsten Punkt
des Dragierkessels zum Liegen kommt.

Eine solche Dragierkesselentleerung ist deshalb
beliebt, weil bei Öffnen der Kesselklappe der
Dragierkesselinhalt von selbst durch die Schwerkraft herausfällt. So kann man dann unter die
Kesselklappe einen Behälter stellen, in den der
Dragierkesselinhalt sich von selbst hineinschüttet.
Bislang mußte dabei die Dragierkesselentleerung
manuell betätigt werden. Dazu mußte also zunächst
die Kesselklappe in den tiefsten Punkt des Dragierkessels gebracht werden, in dem die Drehung des
Dragierkessels an geeigneter Stelle von Hand angehalten wurde. Dann mußte die Kesselklappe auch
von Hand geöffnet werden; dies geschah bislang
auch schon dadurch, daß ein pneumatischer Betätigungskolben für die Kesselklappe von Hand mit
einer separaten Preßluftquelle in Verbindung gebracht wurde. Auch war dabei aber eine zuverlässige Trennung der schwarzen Zone von der
grauen Zone nicht gewährleistet. Die schwarze
Zone beinhaltet dabei den Produktionsbereich um
die Antriebsmechanik des Dragierkessels; die graue,
sauberere Zone, ist der eigentliche Produktionsbereich. Dieser muß die graue Zone sein, da für
Arzneimittel, wie sie gewöhnlich in den Dragier-

- 2 -

kesseln hergestellt werden, besonders hohe
Reinheitsanforderungen gelten. Insofern ist es
auch nicht erwünscht oder zuweilen sogar untersagt, die fertigen Dragees mit der schwarzen
Zone irgendwie in Berührung zu bringen. Gerade
dies konnte aber bei den bisherigen Dragierkesselentleerungen nicht zuverlässig verhindert
werden. So war bislang notwendig, die Dragierwand zu öffnen, so daß man durch diese Öffnung
unter die Kesselklappe den Auffangbehälter stellen
konnte. Das Öffnen der Kesselklappe selbst wurde
bisweilen durch Druckluft bewirkt, die, eigentlich
als schwarze Luft, aus der grauen Zone heranzuführen war.

Zunächst gilt der Erfindung die Lösung der Aufgabe,
eine selbsttätige Dragierkesselentleerung zu
schaffen, also eine solche Entleerung, die eine
manuelle Betätigung weitgehend entbehrlich macht.

Der Erfindung liegt weiterhin die Aufgabe zugrunde,
eine Dragierkesselentleerung zu schaffen, die auch
beim Entleerungsvorgang eine zuverlässige Trennung
der schwarzen Zone von der grauen Zone garantiert,
die insbesondere sogar eine absolute Trennung
des Dragierkesselinhalts beim Entleeren von der
schwarzen Zone schafft.

Diese Aufgabe wird erfindungsgemäß dadurch gelöst,
daß auf der Außenseite der Kesselwand ein Zentriersockel angeordnet ist, der einer in den Zentriersockel passenden, ortsfesten Zentrierplatte gegenüber liegt. Ortsfest heißt hinsichtlich der
Zentrierplatte, daß sie zwar an sich feststehend
ist, jedoch eine Verschiebungsbewegung in den
Zentriersockel ausführen kann. Zentriersockel und

- 3 -

Zentrierplatte sind dabei jeweils so zueinander angeordnet, daß die Kesselklappe in der Kesselwand im tiefsten Punkt des Dragierkessels liegt. Dann kann der Entleerungsvorgang betrieben werden. Dies geschieht dann dadurch, daß die Kesselklappe geöffnet wird; der Inhalt des Dragierkessels kann dann durch die offene Kesselklappe austreten, z.B. durch einen Entleerungskanal in einer Dragierwand, die üblicherweise vor dem Dragierkessel steht, um die schwarze Zone hinter dem Dragierkessel von der grauen Zone vor dem Dragierkessel zu trennen. Der Entleerungskanal in der Dragierwand ist dazu selbstverständlich so angeordnet, daß seine Mündungsöffnung dem tiefsten Punkt des Dragierkessels gegenüberliegt, daß also die Kesselklappe sich in diese Mündungsöffnung auftut. Die Funktion wird noch im einzelnen anhand besonderer Ausführungsformen der Erfindung erläutert werden.

Der Entleerungskanal in der Dragierwand mündet dann in der Dragierwand in einer Entleerungsöffnung, die ülicherweise in die graue Zone hin gerichtet ist. Allerdings gilt das vorgesagte zur Dragierkesselentleerung auch in dem Falle, wo vor dem Dragierkessel eine Dragierwand nicht angeordnet ist.

- 4 -

Eine neuere, besonders zuverlässige Trennung der grauen Zone von der schwarzen Zone kann bei der Dragierkesselentleerung insbesondere dann erreicht werden, wenn der Dragierkessel selbst hinter einer Dragierwand angeordnet ist, die unter dem tiefsten Punkt des Dragierkessels von der grauen Zone in die schwarze Zone gezogen ist, wobei die Dragierwand eine dem tiefsten Punkt des Dragierkessels gegenüberliegenden Entleerungsöffnung aufweist und ein Zentriersockel auf der Außenseite der Kesselwand einer in den Zentriersockel passenden, ortsfesten Zentrierplatte gegenüberliegt. Die vorgenannte Dragierwand, die bis unter den tiefsten Punkt des Dragierkessels von der grauen Zone in die schwarze Zone gezogen sein soll, ist z.B. schon aus der DE-OS 3o 17 1o1 bekannt. Bei der hier vorliegenden Form dieser Dragierwand ist aber möglichst das Unterteil der Dragierwand noch weiter unter die Dragierkessel gezogen, ebenso daß gegenüber dem tiefsten Punkt des Dragierkessels noch ein Teil der Dragierwand liegt, insbesondere ein etwa waagrecht verlaufender. Dies wird noch anhand des dargestellten Ausführungsbeispiels im folgenden erläutert werden. Daß die Zentrierplatte ortsfest sein soll, soll lediglich bedeuten, daß sie sich nicht mit dem Dragierkessel drehen soll. Ansonsten aber kann sie auf

- 5 -

den Zentriersockel hin beweglich sein. Auch dies
wird noch anhand des Ausführungsbeispieles erläutert werden.

Eine ganz sichere Trennung der schwarzen Zone
von der grauen Zone wird besonders dann gewährleistet, wenn in der Entleerungsöffnung der
Dragierwand eine eigene Klappe angeordnet ist.
Somit weist dann die Dragierwand überhaupt keine
Verbindungsöffnung zwischen der schwarzen Zone
und der grauen Zone auf.

Damit der Dragierkesselinhalt beim Herausfallen
von der schwarzen Zone abgeschirmt ist, ist in
einer weiteren bevorzugten Ausführungsform um
die Öffnung der Kesselklappe ein Entleerungsstutzen angeordnet. Dieser Entleerungsstutzen
erstreckt sich somit bis zur Entleerungsöffnung
in der Dragierwand, bildet somit einen Kanal
bzw. ein Tunnel für den Dragierkesselinhalt.

Um restliche Luft der schwarzen Zone vor und
beim Entleeren des Dragierkessels aus dem Entleerungsstutzens zu vertreiben, ist bevorzugterweise eine besondere Spüldüse für reines Spülgas, also graues Gas oder sogar weisses Gas,
in dem Entleerungsstutzen angeordnet.

Eine ganz besonders zuverlässige Abschirmung
des Dragierkesselinhaltes von der schwarzen Zone
wird zusätzlich noch dadurch gewährleistet, daß

- 6 -

um die Entleerungsöffnung ein Ringkanal mit in die schwarze Zone gerichteten Düsen für Spülgas angeordnet ist, die zum Außenrand des Entleerungsstutzens benachbart sind. Das durch die Düsen austretende graue oder sogar weisse Spülgas bildet somit um den Entleerungsstutzen herum einen Gasvorhang, der eine Dichtung zwischen der schwarzen Zone und der grauen Zone darstellt.

Die selbsttätige Ausrichtung der Kesselklappe zu der Entleerungsöffnung in der Dragierwand kann dadurch gewährleistet sein, daß auf der Außenseite der Kesselwand ein Tastarm angeordnet ist, der einem feststehenden Induktionsschalter gegenüberliegt. Dies betrifft selbstverständlich die Orientierung des Dragierkessels, in der eben die Kesselklappe der Entleerungsöffnung gegenüberliegt. Dann löst der Tastarm den Induktionsschalter aus. Dies kann dann bewirken, daß die Drehung des Dragierkessels angehalten wird. Dies kann dann insbesondere dadurch erfolgen, daß die Zentrierplatte in den zu ihr passenden Zentriersockel eingefahren wird. Infolgedessen wird dann der Dragierkessel angehalten und in der vorbezeichneten Lage festgehalten. Da der Induktionsschalter nur anspricht, wenn der Tastarm ihm gegenüberliegt, ist somit ein selbsttätiges Anhalten und Orientieren des Dragierkessels stets gewährleistet.

Zur Versorgung der Spüldüse im Entleerungsstutzen kann zusätzlich in der Zentrierplatte noch eine Spülgaszuführung angeordnet sein, die einer passenden Spülgaszuleitung im Zentriersockel

- 7 -

gegenüberliegt, wobei diese Spülgaszuleitung
mit der Spüldüse verbunden ist. Ist somit die
Zentrierplatte in den Zentriersockel eingefahren,
so ist die Spülgaszuführung mit der Spülgaszuleitung verbunden. Dann kann das Spülgas von der
ortsfesten Zentrierplatte aus in den Zentriersockel übergeben werden. Eine Drehverbindung
entfällt daher für das Spülgas. Dies ist wichtig,
da es graue oder gar weisse Spülgas-Drehverbindungen
nicht gibt bzw. äußerst aufwendig wären. Insbesondere müßte eine Drehdurchführung durch die
Achse des Dragierkessels geführt werden, was
große Umstände in der Antriebsmechanik des
Dragierkessels bedingt.

Entsprechendes gilt für eine Druckluftversorgung
des Zylinders zur Betätigung der Kesselklappe.
So kann in der Zentrierplatte außerdem noch eine
Druckluftzuführung angeordnet sein, die einer
passenden Druckluftleitung im Zentriersockel
gegenüberliegt, wobei die Druckluftleitung an den
Zylinder zur Betätigung der Kesselklappe angeschlossen ist. Auch hier wird eine umständliche
Drehdurchführung vermieden. Ist die Zentrierplatte in den Zentriersockel eingefahren, so
wird die Druckluftzuführung mit der Druckluftleitung verbunden.

Anzufügen ist, daß in der Regel der Dragierkessel
allein schon durch das Einfahren der Zentrierplatte in den Zentriersockel angehalten werden
kann, zumal damit ein Abschalten des Antriebsmotors für die Dragierkesseldrehung verbunden
ist. Insofern wirkt der Antriebsmotor regelmäßig

- 8 -

noch von selbst als Dragierkesselbremse. Gegebenenfalls kann es aber erforderlich sein, daß gleichzeitig mit dem Einfahren der Zentrierplatte in den Zentriersockel eine gesonderte Kesselbremse betätigt wird.

Schließlich wird eine der erfindungsgemäßen Dragierkesselentleerungen wie folgt gesteuert:

a)  Zunächst wird die Zentrierplatte in den Zentriersockel gefahren. Dadurch wird also der Dragierkessel angehalten und die Kesselklappe kommt gegenüber der Entleerungsöffnung zum Liegen;

b)  sodann wird gegebenenfalls die Spüldüse in dem Entleerungsstutzen mit Spülgas beaufschlagt, so daß Reste der schwarzen Zone aus dem Entleerungsstutzen ausgetrieben werden;

c)  sodann wird gegebenenfalls der Ringkanal mit den Düsen an der Entleerungsöffnung mit Spülgas beaufschlagt, so daß um den Außenrand des Entleerungsstutzens eine wirksame Dichtung geschaffen wird. Dies ist häufig deshalb notwendig, weil der Überdruck in der grauen Zone häufig zu klein ist, als daß er alleine den Luftspalt zwischen dem Entleerungsstutzen und der Entleerungsöffnung dichtend ausfüllen könnte;

d)  sodann wird gegebenenfalls die Klappe in der Entleerungsöffnung geöffnet;

e)  und schließlich wird die Kesselplatte geöffnet.

Sodann kann der Dragierkesselinhalt in die graue Zone herausfallen. Dazu wird dann üblicherweise unter die Entleerungsöffnung ein Behälter gestellt.

0099038

- 9 -

Ein Ausführungsbeispiel der Erfindung ist in den
Zeichnungen dargestellt. Es zeigen:

Figur 1  den Querschnitt einer erfindungsgemäßen
         Dragierkesselentleerung;
Figur 2  die Detailansicht der erfindungsgemäßen
         Vorrichtungen im Bereich der Kessel-
         klappe und der Entleerungsöffnung;
Figur 3  einen Ausschnitt die Zentrierplatte mit
         ihrem Antrieb und den Zentriersockel auf
         der Kesselwand darstellend;
Figur 4  perspektivische Ansichten von der
         Zentrierplatte und dem Zentriersockel;
Figur 5  eine schematische Darstellung der
         Steuerung.

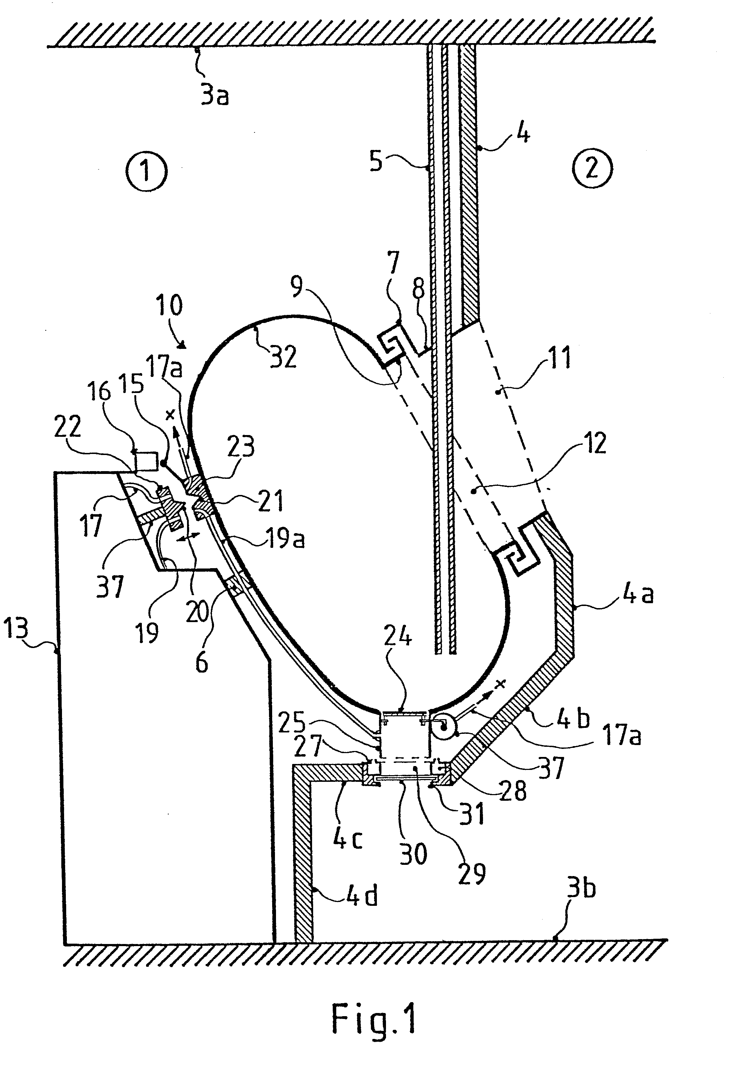

In Figur 1 ist als Ausführungsbeispiel eine
Dragierkesselöffnung gewählt, bei der die
Dragierwand entsprechend der DE-OS 30 17 101
ausgebildet ist. Sie ist dazu in ihrem Unterteil
bis unter den tiefsten Punkt des Dragierkessels
von der grauen Zone 2 in die schwarze Zone 1
gezogen. Das Wandoberteil 4 ist, wie bekannt,
im Bereich der Kesselöffnung 12 gegenüberliegenden
Wandöffnung 11 schräg nach vorne zum senkrechten
Wandmittelteil 4a gezogen. Das Wandmittelteil 4a
wird nach unten nach innen in dem Wandschrägteil
4b fortgesetzt. Dieses Wandschrägteil 4b wird
aber dann unterhalb des Dragierkessels im Bereich
des tiefsten Punktes desselben waagrecht in dem
Wandunterteil 4c fortgesetzt. Hier befindet sich
in diesem Wandunterteil 4c auch die Entleerungsöffnung 29, die der Kesselklappe 24 gegenüberliegt, sofern die Kesselklappe 24 in dem tiefsten Punkt des Dragierkessels liegt. Das Wandunterteil 4c schließlich wird dann unter dem Dragierkessel in dem Wandfußteil 4d bis zum Boden 3b der Produktionsstätte geführt. Währenddessen schließt das Wandoberteil 4b an der Decke 3a ab. Der Dragierkessel 1o weist den Kesselrand 9 auf, der zusammen mit dem Kragenrand 7 eine besondere Labyrinthdichtung bildet. Der Kragenrand 7 ist an dem besonderen Kragen 8 angeordnet, der die Wandöffnung und die Kesselöffnung 12 umgibt. Der Dragierkessel 1o wird von einem Antriebs- aggregat 13 über die Achse 6 angetrieben. Deutlich zu erkennen ist auf der Außenseite der Dragierkesselwand 32, hier auf der Rückseite des Dragier- kessels 1o, der Zentriersockel 23. Er besitzt das Zentrierlager 21, das dem Zentrierkopf 2o auf der Zentrierplatte 22 gegenüberliegt. Der Zentrierkopf 2o hat eine zu dem Zentrierlager 21 passende Form. Dargestellt ist die Situation, in der die Zentrierplatte 22 dem Zentriersockel 23 gegenüberliegt, so daß die Kesselklappe 24 der Entleerungsöffnung 29 gegenüberliegt. Die Zentrierplatte 22 ist zwar ortsfest, kann jedoch vermöge des Zylinders 37 in den Zentriersockel 23 hineingefahren bzw. herausgefahren werden. Die Kesselklappe 24 wird ihrerseits von einem Zylinder 37 betätigt, also geöffnet. In der Entleerungsöffnung 29 ist eine Schiebeklappe 33 angeordnet. Umgeben wird die Entleerungsöffnung 29 von dem Ringkanal 28. Dieser weist in die schwarze Zone 1 gerichtete Düsen 27 auf, die außen zum Rand des Entleerungsstutzens 25 benachbart angeordnet sind. Ferner ist zu erkennen, wie der Tastarm 15 an dem Zentriersockel 23 dem Induktionsschalter 16 gegenüberliegt. Der Induktionsschalter 16 ist ebenfalls ortsfest, und zwar ist er an dem Gehäuse des Antriebsaggregates 13 befestigt. Er spricht nur dann an, wenn der Tastarm 15 ihm gegenüberliegt. Dann bewirkt er ein Abschalten des Antriebsaggregates 13; er bewirkt weiterhin, daß die Zentrierplatte 22 in den Zentriersockel 23 gefahren wird, daß also im Ergebnis die Kesselklappe 24 über die Entleerungsöffnung 29 zentriert wird.

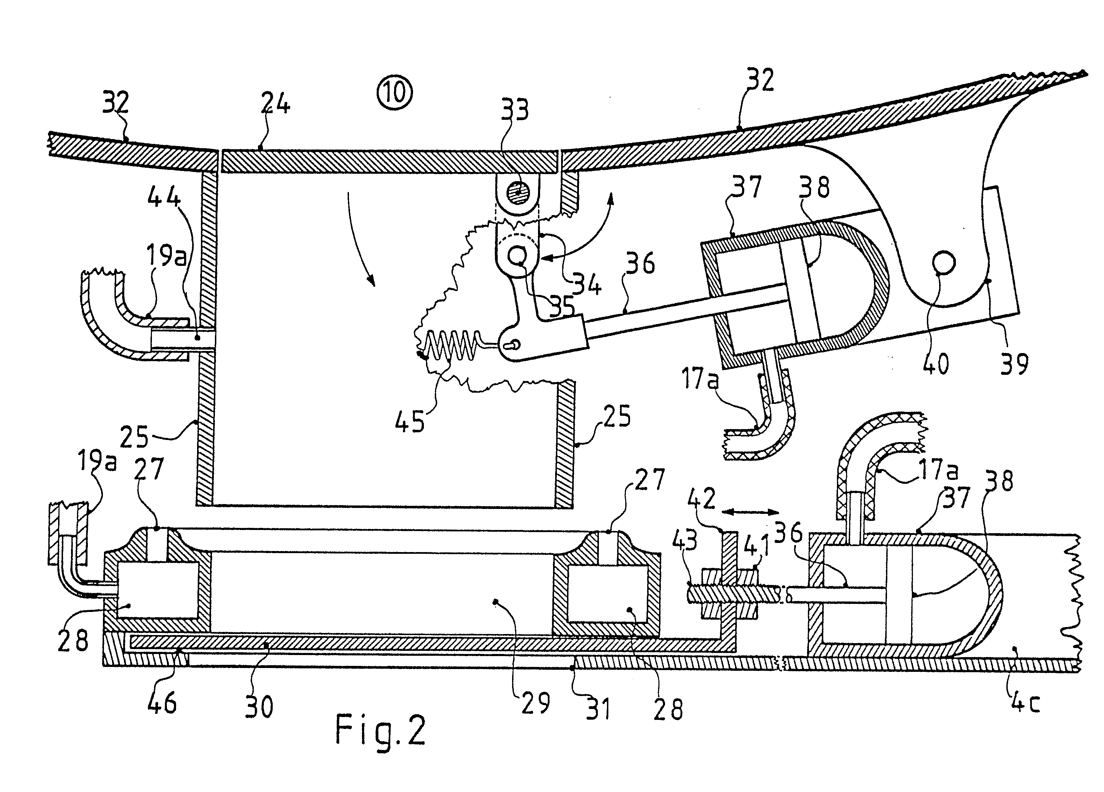

In Figur 2 ist im Ausschnitt diese Situation deutlich dargestellt. Die Kesselklappe 24 ist noch geschlossen. Sie kann um das Drehlager 33 aufgeklappt werden. Dazu ist durch die Druckluftleitung 17a Druckluft in den Zylinder 37 an dem Lagerflansch an der Kesselwand 32 zu geben. Hier kann sich übrigens dieser Zylinder 37 um das Zylinderlager 4o drehen. Der Kolben 38 wird verdrängt, so daß die Kolbenstange 36 in den Zylinder 37 gezogen wird. Dann wird aber der Winkelarm an der Kolbenstange 36 gegen das Gelenk 35 zurückgezogen, so daß der Dreharm 34 eine Drehbewegung ausführen muß. Infolgedessen klappt dann die Kesselklappe 24 auf, sie klappt in den Entleerungsstutzen 25. Das Schließen der Klappe wird zwangsläufig von einer Zugfeder 45 bewirkt, die die rückläufige Bewegung der Kolbenstange 36 aufzwingt. Sie ist daher einerseits an dem Ende der Kolbenstange 36 eingehängt und andererseits z. B. an dem Entleerungsstutzen 25 verspannt. An Stelle der Zugfeder 45 an dem freien Ende der Kolbenstange 36 kann auch ein sogenannter Federzylinder eingesetzt sein. Bei diesem befindet sich zwischen der Stirnwand des Zylinders 37, die von der Kolbenstange 36 durchtreten wird und dem Kolben 38 eine Druckfeder.

Sie wirkt im gleichen Sinne, wie die vorbeschriebene Zugfeder 45. Bevor die Kesselklappe 24 geöffnet wird, kann durch die Spülgaszuleitung 19a in die Spüldüse 44 Spülgas geleitet werden. Infolgedessen wird das Innere des Entleerunsstutzens 25 mit sauberem Gas gespült und Reste aus der schwarzen Zone 1 werden vertrieben. Zusätzlich kann der Ringkanal 28 durch die Spülgaszuleitung 19 mit Spülgas beaufschlagt werden. Infolgedessen wird dann aus den Düsen 27 Spülgas außen am Rand des Entleerungsstutzens 25 vorbeigeführt. Dies gibt eine gasvorhangähnliche Dichtwirkung. Die Schiebeklappe 30 wird ihrerseits durch Druckluft betätigt. Dazu ist durch eine weitere Druckluftleitung 7a wiederum in einem Zylinder 37 der Kolben 38 vermöge Druckluft zu verdrängen. Die Kolbenstange 36 wird dann in den Zylinder 37 hineingezogen. Die in der Mutter 41 gelagerte Gewindestange 41 muß diese Bewegung folgen, da sie an der Kolbenstange 36 fest angebracht ist. Da die Mutter 41 an dem Klappenarm 42 befestigt ist, wird also im Ergebnis die Schiebeklappe 30 zurückgezogen. Sie kann dazu auf der Gleitfläche 46 gleiten. Schließlich wird somit die Entleerungsöffnung 29 frei gegeben. Auf seitlich wird die Schiebeklappe 30 von dem Führungsrand 31 getragen, ebenfalls über eine Gleitfläche 46.

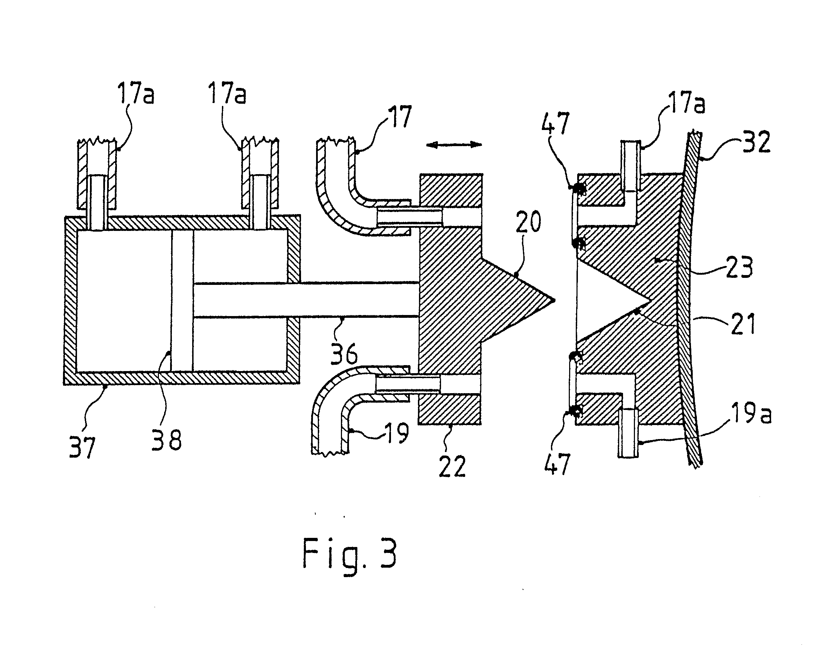

In Figur 3 ist dargestellt, wie die Zentrierplatte 22 mit dem Zentriersockel 23 zusammenwirkt. So wird der auf der Zentrierplatte 22 befindliche Zentrierkopf 20 in das Zentrierlager 21 des Zentriersockels 23 gefahren. Die Bewegung der Zentrierplatte wird wiederum durch Druckluft bewirkt. Durch Druckluftleitungen 17a wird der Druckluftzylinder 37 mit dem Kolben 38 und der

- 13 -

Kolbenstange 36, wie bekannt, betätigt. Angeschlossen an die Zentrierplatte 22 sind eine Druckluftzuführung 17 und eine Spülgaszuführung 19. Diese kommen in den Zentriersockel 23 gegenüber der Druckluftleitung 17a und der Spülgaszuleitung 19a zum Liegen. Abgedichtet wird diese formschlüssige Verbindung gegebenenfalls durch Dichtringe 47. Somit hat also die Zentrierplatte in dem Zentriersockel nicht nur eine Halte- und Zentrierfunktion für den Dragierkessel, sondern sie dient auch zur Übergabe von Druckluft und Spülgas auf die Teile an dem Dragierkessel, nämlich die Spüldüse 44 für das Spülgas und den Zylinder 37 zur Betätigung der Kesselklappe 24 für die Druckluft.

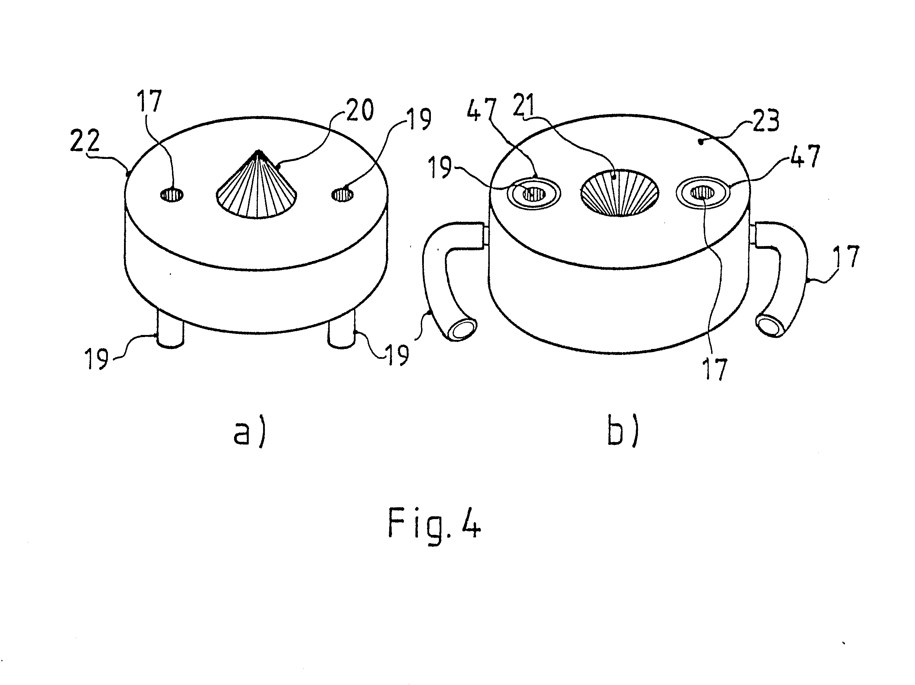

In Figur 4a ist in perspektivischer Ansicht die Zentrierplatt 22 dargestellt. Deutlich ist besonders vorteilhafte Kegelform des Zentrierkopfes 2o zu erkennen. Dieser entspricht in Figur 4b eine kegelförmige Vertiefung, nämlich des Zentrierlagers 21. Diese Ausbildung von Zentrierkopf und Zentrierlager erlauben es, den Dragierkessel auch im Umlauf zuverlässig anzuhalten und im Ergebnis zu zentrieren. Denn durch den Druck auf der Kolbenstange 36, auf der die Zentrierplatte 22 angeordnet ist, wird der Zentrierkopf 2o so tief in das Zentrierlager 21 hineingeschoben, bis die Zentrierplatte 22 selbst auf dem Zentriersockel 23 anschlägt. Dabei wird gegebenenfalls der Dragierkessel zwangsläufig so ein Stück gedreht, daß eben der Zentrierkopf 2o in das Zentrierlager 21 vollständig, also formschlüssig eindringen kann.

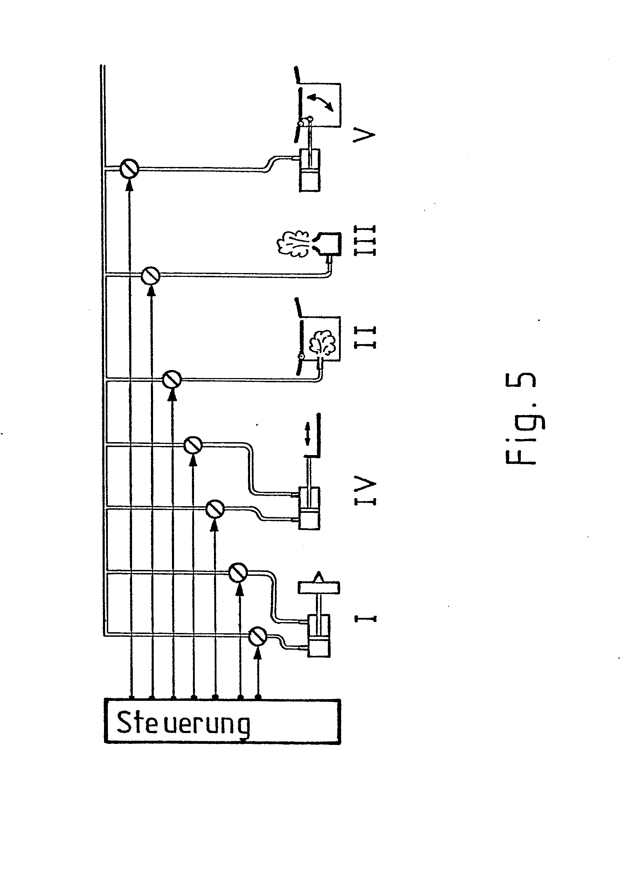

In Figur 5 ist symbolisch der Ablauf der Steuerung dargestellt. Mit römischen Zahlen sind die

- 14 -

einzelnen Steuerungsschritte bezeichnet. Zunächst (I) wird die Zentrierplatte durch Druckluft in den Zentriersockel gefahren. Als zweiter Schritt (II) wird dann ein Ventil geöffnet, so daß durch die Spülgaszuführung das Spülgas in die Spülgaszuleitung bis in die Spüldüse im Entleerungsstutzen tritt. Sobald dieser Spülungsvorgang fortgeschritten ist, wird (III) ein anderes Ventil geöffnet, so daß der Ringkanal mit den Düsen ebenfalls mit Spülgas beaufschlagt wird. Somit ist dann endlich der Entleerungsstutzen von der schwarzen Zone abgedichtet. Darauf wird dann (IV) die Schiebeklappe in der Entleerungsöffnung betätigt, entsprechend der Betätigung der Zentrierplatte. Dies geschieht ebenfalls, wie gesagt, durch Druckluft. Schließlich wird ein weiteres Ventil in der Druckluftzuführung geöffnet, so daß durch die Druckluftleitung Druckluft in den die Kesselklappe betätigten Druckluftzylinder gelangt, daß also die Kesselklappe geöffnet wird.

- 15 -

## Zeichenerklärung

| | |
|---|---|
| 1 | schwarze Zone |
| 2 | graue Zone |
| 3a | Decke |
| 3b | Boden |
| 4 | Wandoberteil |
| 4a | Wandmittelteil |
| 4b | Wandschrägteil |
| 4c | Wandunterteil |
| 4d | Wandfußteil |
| 5 | Sonde |
| 6 | Achse |
| 7 | Kragenrand |
| 8 | Kragen |
| 9 | Kesselrand |
| 1o | Dragierkessel |
| 11 | Wandöffnung |
| 12 | Kesselöffnung |
| 13 | Antriebsaggregat |
| 15 | Tastarm |
| 16 | Induktionsschalter |
| 17 | Druckluftzuführung |
| 17a | Druckluftleitung |
| 19 | Spülgaszuführung |
| 19a | Spülgaszuleitung |
| 2o | Zentrierkopf |
| 21 | Zentrierlager |
| 22 | Zentrierplatte |
| 23 | Zentriersockel |
| 24 | Kesselklappe |
| 25 | Entleerungsstutzen |
| 27 | Düsen |
| 28 | Ringkanal |

0099038

- 16 -

| 29 | Entleerungsöffnung |
|----|--------------------|
| 30 | Schiebeklappe |
| 31 | Führungsrand |
| 32 | Kesselwand |
| 33 | Drehlager |
| 34 | Dreharm |
| 35 | Gelenk |
| 36 | Kolbenstange |
| 37 | Zylinder |
| 38 | Kolben |
| 39 | Lagerflansch |
| 40 | Zylinderlager |
| 41 | Mutter |
| 42 | Klappenarm |
| 43 | Gewindestange |
| 44 | Spüldüse |
| 45 | Zugfeder |
| 46 | Gleitfläche |
| 47 | Dichtring |

A n s p r ü c h e

1. Dragierkesselentleerung bei einem Dragierkessel mit einer Kesselklappe (24) in der Kesselwand (32), die im tiefsten Punkt derselben beim Entleerungsvorgang liegt,
dadurch gekennzeichnet,
daß ein Zentriersockel (23) auf der Außenseite der Kesselwand (32) einer in den Zentriersockel (23) passenden, ortsfesten Zentrierplatte (22) gegenüber liegt.

2. Dragierkesselentleerung nach Anspruch 1,
dadurch gekennzeichnet,
daß der Dragierkessel (1o) hinter einer Dragierwand angeordnet ist, die eine dem tiefsten Punkt des Dragierkessels gegenüberliegende Entleerungsöffnung (29) aufweist.

3. Dragierkesselentleerung nach Anspruch 2,
dadurch gekennzeichnet,
daß die Dragierwand unter dem tiefsten Punkt des Dragierkessel von der grauen Zone (2) in die schwarze Zone (1) gezogen ist.

4. Dragierkessel nach Anspruch 2 und/oder 3,
dadurch gekennzeichnet,
daß in der Entleerungsöffnung (27) eine eigene Klappe angeordnet ist.

5. Dragierkesselentleerung nach mindestens einem der Ansprüche 1 bis 4,
dadurch gekennzeichnet,
daß um die Öffnung der Kesselklappe (24) ein Entleerungsstutzen (25) angeordnet ist.

6. Dragierkesselentleerung nach Anspruch 5,
   dadurch gekennzeichnet,
   daß in dem Entleerungsstutzen (25) eine Spüldüse
   (44) für Spülgas angeordnet ist.

7. Dragierkesselentleerung nach Anspruch 5 und/oder 6,
   dadurch gekennzeichnet,
   daß um die Entleerungsöffnung (29) ein Ringkanal
   (28) mit in die schwarze Zone (1) gerichteten
   Düsen (27) für Spülgas angeordnet ist, die zum
   Außenrand des Entleerungsstutzens benachbart sind.

8. Dragierkesselentleerung nach mindestens einem
   der Ansprüche 1 bis 7,
   dadurch gekennzeichnet,
   daß auf der Außenseite der Kesselwand (32) ein
   Tastarm (15) angeordnet ist, der einem feststehenden Induktionsschalter (16) gegenüberliegt.

9. Dragierkesselentleerung nach mindestens einem
   der Ansprüche 1 bis 8,
   dadurch gekennzeichnet,
   daß in der Zentrierplatte (22) eine Spülgaszuführung (19) angeordnet ist, die einer passenden
   Spülgaszuleitung (19a) im Zentriersockel (23)
   gegenüberliegt, wobei die Spülgaszuleitung (19a)
   mit der Spüldüse (44) verbunden ist.

10. Dragierkessel nach mindestens einem der Ansprüche
    1 bis 9,
    dadurch gekennzeichnet,
    daß in der Zentrierplatte (22) eine Druckluftzuführung (17) angeordnet ist, die einer passenden
    Druckluftleitung (17a) im Zentriersockel (23)
    gegenüberliegt, wobei die Druckluftleitung (17a)
    an den Zylinder (37) zur Betätigung der Kesselklappe (24) angeschlossen ist.

11. Steuerung einer Dragierkesselentleerung nach
einem oder mehreren der vorstehenden Ansprüche,
dadurch gekennzeichnet,
daß

a) die Zentrierplatte (22) in den Zentriersockel
(23) gefahren wird,

b) gegebenenfalls die Spüldüse (44) in dem Entleerungsstutzen (25) mit Spülgas beaufschlagt wird,

c) gegebenenfalls der Ringkanal (28) mit den
Düsen (27) an der Entleerungsöffnung (29) mit
Spülgas beaufschlagt wird,

d) gegebenenfalls die Klappe in der Entleerungsöffnung (29) geöffnet wird,

e) und schließlich die Kesselklappe (24) geöffnet
wird.

Fig.1

Fig.2

Fig. 3

a)

b)

Fig.4

Fig. 5